# EUROPEAN PATENT SPECIFICATION

(11) **EP 4 180 823 B1**
(45) Date of publication and mention of the grant of the patent: **01.01.2025**
(21) Application number: 22197997.4
(22) Date of filing: 27.09.2022
(51) Int. Cl.: G01P 3/481, G01D 5/20

(54) **TACHOMETER USING WIEGAND WIRE AND FAULT DETECTION METHOD THEREOF**
TACHOMETER MIT WIEGANDDRAHT UND FEHLERERKENNUNGSVERFAHREN DAFÜR
TACHYMÈTRE UTILISANT UN FIL WIEGAND ET SON PROCÉDÉ DE DÉTECTION DE DÉFAILLANCE

(30) Priority: 15.11.2021 KR 20210156360
(43) Date of publication of application: 17.05.2023
(73) Proprietor: Korea Railroad Research Institute, Uiwang-si, Gyeonggi-do 16105 (KR)
(72) Inventor: CHAE, Eun Kyung, Gunpo-si, Gyeonggi-do (KR); RYU, Joon Hyung, Gunpo-si, Gyeonggi-do (KR)
(74) Representative: Manitz Finsterwald Patent- und Rechtsanwaltspartnerschaft mbB

(56) References cited:
- DE-A1- 2 826 609
- DE-A1- 3 326 135
- DE-A1- 4 224 129
- KR-A- 20200 052 488

## Description

### TECHNICAL FIELD

The present invention relates to a tachometer device using a Wiegand wire and a fault detection method using a tachometer device.

### BACKGROUND

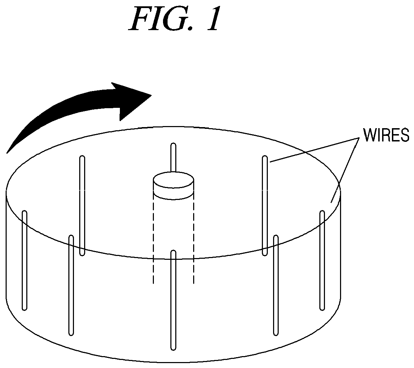

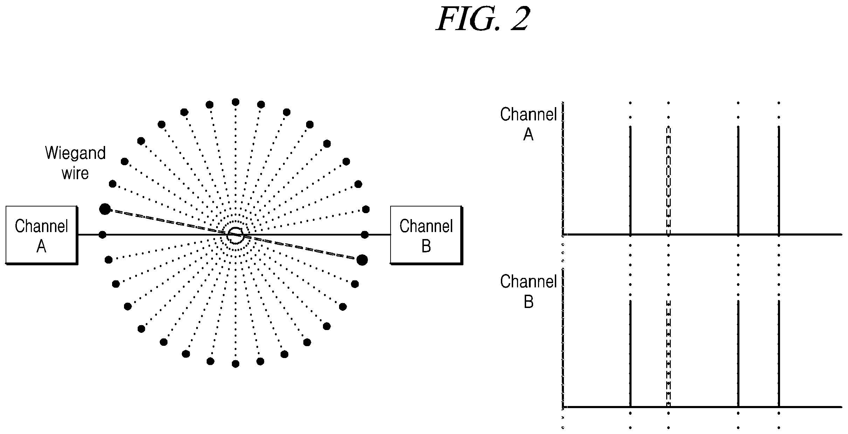

FIGS. 1 and 2 illustrate a configuration of a tachometer for a rail vehicle having a general structure.

As illustrated in the drawings, a tachometer used in a rail vehicle includes a plurality of cylindrical Wiegand wires (32 wires in the drawings) arranged along a circumference thereof, and angles between the Wiegand wires are equal to each other. In addition, two measurement channels for measuring pulses are arranged on an outer circumferential surface to face each other. In this case, when a wheel rotates, pulses are generated according to a change in a magnetic field, and the respective measurement channels measure the generated pulses to calculate the number of rotations of a wheel and a rotation speed thereof. The Wiegand wires are installed at uniform intervals, and a first measurement channel A and a second measurement channel B arranged to face each other measure pulses generated from the Wiegand wires. Some of the respective Wiegand wires face each other, and the pulses generated from the Wiegand wires facing each other in this way are detected by the first measurement channel A and the second measurement channel B at the same time.

In this case, intervals between pulses change according to a rotation speed of a wheel, and thus, a vehicle speed can be calculated based thereon.

Meanwhile, intervals between times at which pulses are measured by each measurement channel are the same, and thus, there can be an unrecognized pulse as the vehicle speed increases. Currently, the tachometer can calculate a speed even when pulses at a rate corresponding to an allowable level (10 to 15% or so on of the total Wiegand wires) are not recognized among the pulses generated by the Wiegand wires.

According to this method, a tachometer can detect a fault thereof by measuring pulses of the first measurement channel A and the second measurement channel B and comparing the pulses. However, because the Wiegand wires are uniformly arranged, absolute positions of the Wiegand wires cannot be checked, and thus it is not possible to determine which Wiegand wire is damaged.

An interval between pulses can change depending on speeds, and thus, it is not possible to check whether the pulses of the Wiegand wires are omitted with the interval between pulses. A starting point of rotation cannot be known through the conventional Wiegand wires, and thus, even when a pulse is temporarily omitted, the omission cannot be checked, and when pulses in a level less than the allowable level are not recognized continuously, errors can be accumulated in the number of revolutions.

In addition, when a fault occurs in the number of the Wiegand wires in a level less than the allowable level, a tachometer can calculate a speed in a normal state even when a faulty Wiegand wire does not generate pulses, and thereby, a fault of the Wiegand wire cannot be detected. Accordingly, a fault cannot be predicted until a fault occurs in the Wiegand wire in a level greaterthan orequal to the allowable level among all Wiegand wires.

As such, in the prior art, an absolute position of a faulty Wiegand wire cannot be identified, and thus, a waste of replacing all Wiegand wires can occur.
In this regard, a tachometer using a Wiegand wire has previously been proposed and examples are disclosed in DE 33 26 135 A1 (Title: Rotary transducer) and KR 2020 0052488 A (Title: apparatus and method for controlling output of magnetic tachometer). DE 33 26 135 A1 shows a rotary transducer determining the rotary speed of a machine and having a close, equidistant sequence of Wiegand wires with a gap in this sequence of Wiegand wires. This also makes it possible to recognise the failure of individual Wiegand wires.
These documents do not disclose or suggest a first measurement channel and a second measurement channel arranged to face each other on both sides of the rotor and/or that the rotor includes a plurality of Wiegand wires uniformly arranged along a circumference thereof.

### PRIOR ART LITERATURE

### Patent Literature

Korean Patent Registration No. KR 10-2155200 B1 (Title of the invention: APPARATUS AND METHOD FOR CONTROLLING OUTPUT OF MAGNETIC TACHOMETER),
DE 33 26 135 A1 (Title of the invention: ROTARY TRANSDUCER),
KR 2020 0052488 A (Title of the invention: APPARATUS AND METHOD FOR CONTROLLING OUTPUT OF MAGNETIC TACHOMETER)

### DISCLOSURE OF THE INVENTION

### PROBLEMS TO BE SOLVED BY THE INVENTION

An object of the present invention is to provide a tachometer that can determine an absolute position of a Wiegand wire and to provide an improved fault detection method.

However, the technical objects to be achieved by the present embodiment are not limited to the technical objects described above, and other technical objects can exist.

### MEANS FOR SOLVING THE PROBLEMS

The object is solved by the features of the independent claims. Further advantageous embodiments are defined in the dependent claims.

### EFFECTS OF THE INVENTION

According to the present invention, an absolute position of a Wiegand Wire can be determined by the configuration described above, and thus, following effects can be obtained. By analyzing a trend of change in intensity of pulses generated in respective Wiegand wires, faults of the Wiegand wires can be predicted to determine when to correct the faults. In addition, it is possible to identify a Wiegand wire in which a pulse is not identified, and when a pulse is not continuously recognized in the Wiegand wire at the same position, a fault of the Wiegand wire can be detected, and thus, only the faulty Wiegand wire can be replaced. In addition, by detecting a fault of a single Wiegand wire and replacing the faulty Wiegand wire, an abnormal operation (an operation delay due to non-recognition of pulses exceeding an allowable standard) due to fault accumulation of multiple Wiegand wires can be prevented. In addition, when a pulse in a level less than an allowable level is continuously unrecognized, positions P1, P2, and so on are recognized for each revolution in order to prevent errors of the number of revolutions from being accumulated, and thereby, the errors of the number of revolutions can be reduced.

### BRIEF DESCRIPTION OF THE DRAWINGS

FIGS. 1 and 2 illustrate a configuration of a tachometer for a rail vehicle having a general structure.
FIG. 3 is a diagram illustrating a configuration of a tachometer according to an embodiment of the present invention.
FIGS. 4A, 4B and 4C illustrate a diagram illustrating a Wiegand wire arrangement structure of a tachometer according to an embodiment of the present invention.
FIGS. 5A, 5C and 5C illustrate a second embodiment of the present invention and illustrates a state in which two special Wiegand wires are arranged.
FIG. 6 illustrates a pulse configuration in a Wiegand wire arrangement structure, according to a second embodiment of the present invention.
FIG. 7 is a flowchart illustrating a fault detection method using a tachometer, according to an embodiment of the present invention.
FIG. 8 is a flowchart illustrating a rail vehicle state monitoring method using a tachometer device, according to an embodiment of the present invention.

### DETAILED DESCRIPTION

Hereinafter, embodiments of the present disclosure will be described in detail with reference to the accompanying drawings such that those skilled in the art can easily implement the embodiments. However, the present disclosure can be embodied in several different forms and is not limited to the embodiments described herein. In order to clearly describe the present disclosure in the drawings, parts irrelevant to the description are omitted, and similar reference numerals are attached to similar components throughout the specification.

Throughout the specification, when a portion is "connected" or "coupled" to another portion, this includes not only a case of being "directly connected or coupled" but also a case of being "electrically connected" with another element interposed therebetween. In addition, when a portion "includes" a certain component, this means that other components can be further included therein rather than excluding other components, unless otherwise stated.

In the present specification, a "part" includes a unit realized by hardware or software and a unit realized by using both, and one unit can be implemented by using two or more pieces of hardware, and two or more units can be implemented by one piece of hardware. Meanwhile, '~ section' is not limited to software or hardware, and '~ section' can be configured to be in an addressable storage medium or can be configured to regenerate one or more processors. Accordingly, as an example, '~ section' indicates configuration elements such as software configuration elements, object-oriented software configuration elements, class configuration elements, and task configuration elements, and progresses, functions, properties, and procedures., subroutines, segments of program code, drivers, firmware, microcode, circuitry, data, databases, data structures, tables, arrays, and variables. The functions provided in the configuration elements and '~ sections' can be combined into a smaller number of configuration elements and '~ sections' or further separated into additional configuration elements and '~ sections'. In addition, configuration elements and '~ sections' can be implemented to regenerate one or more CPUs in a device or secure multimedia card.

A "network" indicates a connection structure in which information can be exchanged between respective nodes such as terminals and servers and includes a local area network (LAN), a wide area network (WAN), the Internet (world wide web (WEB)), a wired and wireless data network, a telephone network, a wired and wireless television network, and so on. The wireless data communication network includes, for example, 3 generation (3G), 4G, 5G, 3rd generation partnership project (3GPP), long term evolution (LTE), world interoperability for microwave access (WIMAX), Wi-Fi, Bluetooth communication, infrared communication, ultrasonic Communication, visible light communication (VLC), LiFi, and so on but are not limited thereto.

A "user terminal" referred to in the present specification can be implemented as a computer or portable terminal that can access a server or another computing device through a network. Here, the computer can include, for example, a laptop computer in which a WEB browser is installed, a desktop computer, a laptop computer, or so on, and the portable terminal is, for example, a wireless communication device that guarantees portability and mobility and can include all kinds of handheld-based wireless communication devices such as various smartphones and tablet personal computers (PCs).

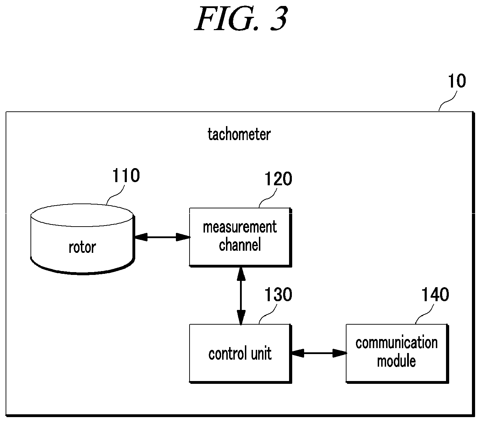

FIG. 3 illustrates a configuration of a tachometer according to an embodiment of the present invention.

A tachometer 10 includes a rotor 110 in which a plurality of Wiegand wires including at least one special Wiegand wire are arrange, measurement channels 120 that are arranged around the plurality of Wiegand wires and measure pulses output from the plurality of Wiegand wires, a control unit 130 that controls an operation of the tachometer 10, and a communication module 140 that transmits a measured value to an external device.

The control unit 130 calculates the number of revolutions of a rotation shaft, in which the tachometer 10 is installed, based on pulse information received from the respective measurement channels 120. In particular, the control unit 130 can determine an absolute position of a special Wiegand wire based on information of pulses generated in the special Wiegand wire and a Wiegand wire located at a point facing the special Wiegand wire, and determine relative positions of other Wiegand wires in the vicinity thereof based on the determined position.

When the pulses detected by a first measurement channel and a second measurement channel are detected at different points in time but are within a preset interval, the control unit 130 recognizes the pulses as pulses output from the special Wiegand wire and a Wiegand wire located at a point facing the special Wiegand wire. When the pulses at different points in time exceed the preset interval, the control unit 130 recognizes the pulses as pulses output from Wiegand wires that are not opposed to each other.

The control unit 130 can include various types of devices for controlling and processing data. The control unit 130 can refer to a data processing device which is embedded in hardware and includes a circuit that is physically structured to perform a function represented as a code or a command included in a program. In one example, the control unit 130 can be implemented by a microprocessor, a central processing unit (CPU), a processor core, multiple processors (multiprocessor), an application-specific integrated circuit (ASIC), or a field programmable gate array (FPGA), but the scope of the present invention is not limited thereto.

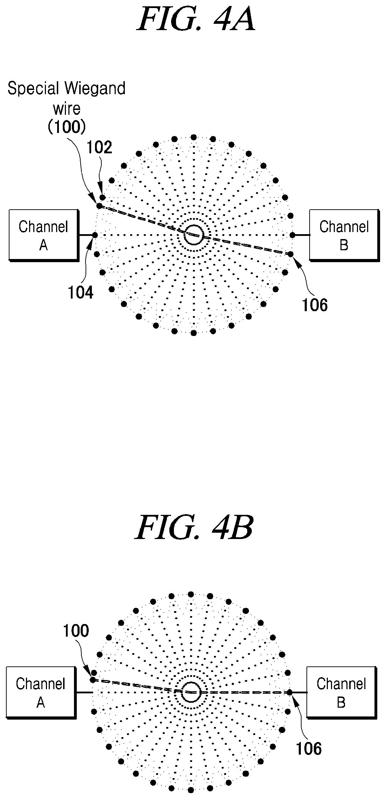

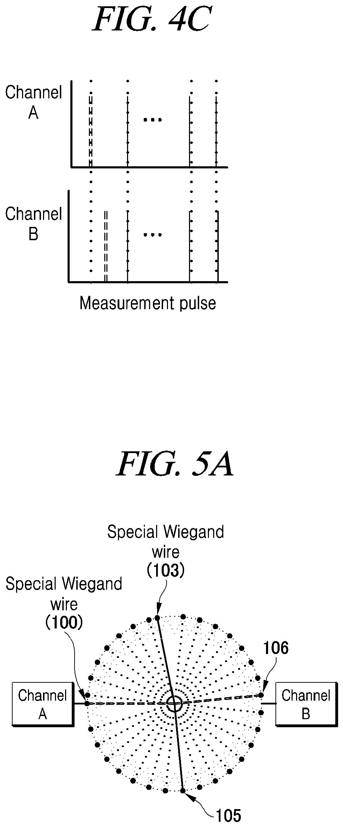

FIGS. 4A, 4B and 4C illustrate a diagram illustrating a Wiegand wire arrangement structure of a tachometer according to an embodiment of the present invention.

The present invention is characterized in that an arrangement state of a Wiegand wire is adjusted such that an absolute position of the Wiegand wire included in a tachometer can be determined.

FIGS. 4A-4C illustrate a first embodiment of the present invention and illustrates a state in which one special Wiegand wire is arranged.

As illustrated, a plurality of Wiegand wires are arranged at uniform intervals, and one of the Wiegand wires is arranged to be closer in angle to an adjacent Wiegand wire.

As illustrated in FIG. 4A, at least two adjacent Wiegand wires 102 and 104 are arranged near a special Wiegand wire 100. In the prior art, intervals between respective Wiegand wires are arranged to have the same angle or the same arc. However, in the present invention, the special Wiegand wire 100 is such that an interval between special Wiegand wires is different from the intervals between other Wiegand wires. Accordingly, intervals between the special Wiegand wire 100 and the surrounding Wiegand wires 102 and 104 are set to be larger or smaller than the intervals between other Wiegand wires. As illustrated, the interval between the special Wiegand wire 100 and the surrounding Wiegand wire 102 is set to be smaller than the interval between the other Wiegand wires, and the interval between the special Wiegand wire 100 and the surrounding Wiegand wire 104 is set to be larger than the interval between the other Wiegand wires.

FIG. 4B illustrates a state in which the Wiegand wire 106 of FIG. 4A is further rotated counterclockwise such that the Wiegand wire 106 facing the special Wiegand wire 100 faces a second measurement channel B. Unlike the prior art, an angular difference between the Wiegand wire 106 and the special Wiegand wire 100 is not 180°, and thus, the special Wiegand wire 100 does not yet face a first measurement channel A.

Accordingly, as illustrated in FIG. 4C, the special Wiegand wire 100 detected by the first measurement channel A is different in measurement point in time (double dotted line pulse) from the Wiegand wire 106 facing the special Wiegand wire 100. Conventionally, since angles of the Wiegand wires facing each other have an angular difference of 180°, pulses of respective Wiegand wires are measured by the first measurement channel A and the second measurement channel B at the same point in time.

However, in the present invention, since an arrangement state of the special Wiegand wire 100 is changed, the measurement point in time is changed, and based on this, an absolute position of the special Wiegand wire 100 can be determined. That is, the Wiegand wire of which pulse is measured at the same point in time by each measurement channel is a general Wiegand wire, and when a predetermined time difference occurs at a measurement point in time of a measurement pulse, the Wiegand wire can be determined by a measurement pulse of the special Wiegand wire 100.

Based on a time difference of the measurement pulses, the absolute position of the special Wiegand wire 100 can be identified every time, and based on pulse measurement information, a position of the Wiegand wire in which a problem occurred can be relatively checked based on the position of the special Wiegand wire 100.

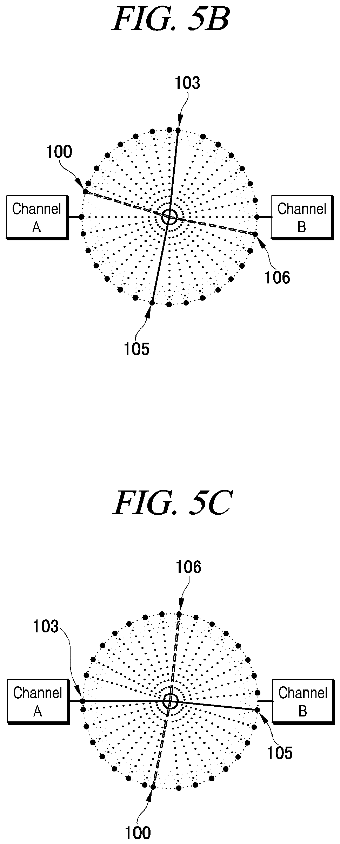

FIGS. 5A, 5B and 5C illustrate a second embodiment of the present invention and illustrates a state in which two special Wiegand wires are arranged, and FIG. 5 illustrates a pulse configuration in a Wiegand wire arrangement structure according to the second embodiment of the present invention.

As illustrated in FIGS. 5A, 5B and 5C it is characterized in that two special Wiegand wires 100 and 103 are respectively arranged. An angle between the first special Wiegand wire 100 and the second special Wiegand wire 103 is designed to be smaller than 180°, preferably smaller than 90°.

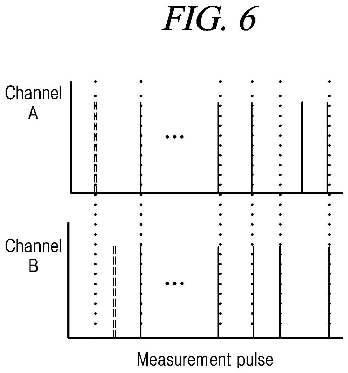

As described above with reference to FIG. 3, the special Wiegand wires use a predetermined time difference in measurement point in time of measurement pulses. As illustrated in FIG. 6, measurement points in time (double dotted pulses) of pulses generated from a first special Wiegand wire 100 and a Wiegand wire 106 facing the first special Wiegand wire can be checked in the first measurement channel A and the second measurement channel B. Similarly, it is possible to check measurement points in time (thick solid line pulses) of the pulses generated from a second special Wiegand wire 103 and a Wiegand wire 105 facing the second special Wiegand wire.

Using this configuration, positions of the first and second special Wiegand wires 100 and 103 can be recognized respectively as special positions P1 and P2, and the special points can be identified as absolute positions of the respective special Wiegand wires.

In addition, a specific point can be added by adjusting a ratio of a time difference between the first measurement channel A and the second measurement channel B.

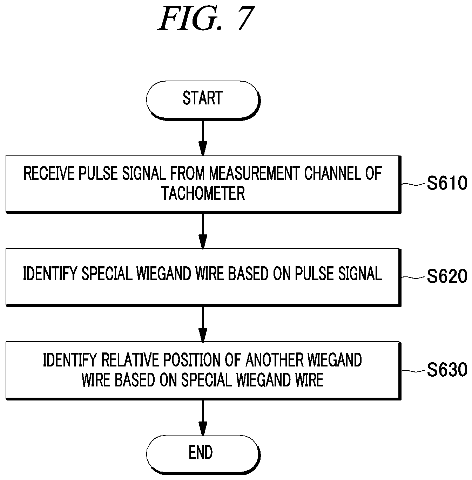

FIG. 7 is a flowchart illustrating a fault detection method using a tachometer, according to an embodiment of the present invention.

First, pulse signals are received from a first measurement channel and a second measurement channel arranged to face each other near the rotor 110 in which a plurality of Wiegand wires are uniformly arranged along a circumference of the rotor (S610). In this case, at least one of the plurality of Wiegand wires included in the rotor 110 is a special Wiegand wire having a different interval from other Wiegand wires, a detailed configuration of which is described above.

Next, an absolute position of the special Wiegand wire is identified based on pulse signals measured in the first measurement channel and the second measurement channel (S620).

As described above, an angle between the special Wiegand wire and the Wiegand wire facing the special Wiegand wire is smaller than 180°, unlike angles between other Wiegand wire pairs, and thus, there is a difference in time between pulses measured by the first and second measurement channels. By using this, when pulses detected by the first and second measurement channels are detected at different points in time and have intervals within a preset interval, the pulses are identified as pulses output from the special Wiegand wire and a Wiegand wire facing the special Wiegand wire.

Next, a relative position of another Wiegand wire is identified based on an absolute position of the special Wiegand wire (S630).

In particular, in order to identify a faulty Wiegand wire, an absolute position of the special Wiegand Wire can be identified. For example, referring to the measurement pulse illustrated in FIG. 6, a pulse of a Wiegand wire having a fault in the middle cannot be measured, and based on this, a position of a Wiegand wire in which a signal is omitted can be checked. The prior art has no means for identifying an absolute position by using a special Wiegand wire, and thus, a faulty Wiegand wire cannot be determined. However, in the present invention, an absolute position of the special Wiegand wire can be clearly identified by using a pulse, and a relative position of a faulty pulse can be checked therefrom. For example, when a pulse to be detected at the fourth position from a pulse of the special Wiegand wire is omitted, an actual rotor can determine that a fault has occurred in the 4th distanced Wigand wire from the special Wiegand wire and cause the faulty Wiegand wire to be replaced.

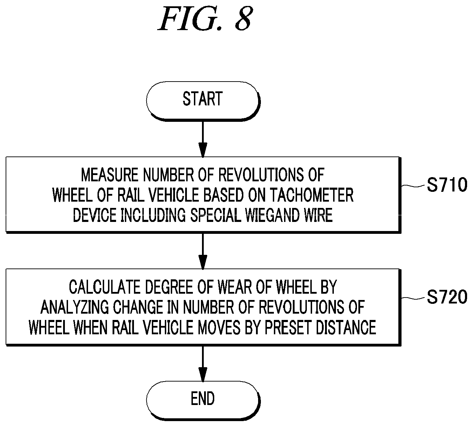

FIG. 8 is a flowchart illustrating a rail vehicle state monitoring method using a tachometer device, according to an embodiment of the present invention.

Referring to FIG. 8, the present invention measures the number of revolutions of a wheel of a rail vehicle based on a tachometer device including a special Wiegand wire (S710). Next, when the rail vehicle moves by a preset distance, a change in the number of revolutions of the wheel is analyzed to calculate a degree of wear of the wheel (S720). In this case, when the degree of wear of the wheel calculated after step S720 is greater than or equal to a threshold, warning can be output. in addition, when a difference in a change rate of the degree of wear calculated for each wheel is greater than or equal to the threshold, warning can be output.

As such, when a tachometer including a special Wiegand wire is used, the tachometer can be used for various purposes.

A tachometer using a special Wiegand wire can accurately calculate the number of revolutions or the number of revolutions of a vehicle shaft to which the tachometer is coupled. By usingthis, a degree of wear of a wheel of a rail vehicle can be predicted. A moving distance of a vehicle is calculated by multiplying a diameter of the wheel by the number of revolutions of the wheel, and when the diameter of the wheel is reduced due to wear of the wheel, the number of revolutions of the wheel increases in a case in which the wheel moves the same distance. As such, the degree of wear of the wheel can be predicted by analyzing a change in the number of revolutions of the wheel, and when the degree of wear of the wheel is greater than or equal to a threshold, warning can be output. In addition, when there is a great difference in a change rate of the number of revolutions for each wheel measured by using a plurality of tachometers arranged in one vehicle, warning can be output. That is, although diameters of respective wheels can be different from each other, degrees of wear of the wheels in the same vehicle have to be approximately the same or within a threshold, and when a difference in the change rate of the degrees of wear of the respective wheels exceeds the threshold, warning is output.

In addition, it is possible to detect abnormality of a tachometer-based speed sensor. In general, two tachometer-based speed sensors are installed on each wheel, and thus, a fault of the speed sensor can be detected by comparing differences in the number of revolutions detected by respective speed sensors in the same wheel.

In addition, it is possible to improve accuracy of a distance calculation by correcting the distance calculation based on a previously calculated prediction value of a degree of wear of a wheel.

The method according to an embodiment of the present invention described above can also be implemented in the form of a recording medium including instructions executable by a computer, such as a program module executed by the computer. Computer-readable media can be any available media that can be accessed by a computer and include both volatile and nonvolatile media and removable and non-removable media. In addition, the computer-readable media can include all computer storage media. The computer storage media includes both volatile and nonvolatile media and removable and non-removable media implemented by any method or technology of storing information, such as a computer readable instruction, a data structure, a program module, and other data.

Although the method and system according to the present disclosure are described with reference to specific embodiments, some or all of their components or operations can be implemented by using a computer system having a general-purpose hardware architecture.

### EXPLANATION OF CODE

10: tachometer
110: rotor
120: measurement channel
130: control unit
140: communication module

## Claims

1. A tachometer device (10) comprising:
a rotor (110) including a plurality of Wiegand wires (102, 104, 105, 106) and at least one special Wiegand wire (100, 103); wherein the plurality of Wiegand wires (102, 104, 105, 106) are uniformly arranged along a circumference of the rotor,
a first measurement channel (A) and a second measurement channel (B) arranged to face each other on both sides of the rotor (110) and configured to measure pulses generated from the plurality of Wiegand wires (102, 104, 105 106) and the at least one special Wiegand wire (100, 103),
wherein the at least one special Wiegand wire (100, 103) is installed to have a different interval from the plurality of Wiegand wires (102, 104, 105, 106).

2. The tachometer device (10) of claim 1, further comprising:
a control unit (130) configured to calculate a number of revolutions of a rotation shaft in which the tachometer device (10) is installable, based on information of pulses measured by the first measurement channel (A) and the second measurement channel (B),
wherein an absolute position of the special Wiegand wire (100, 103) is determined based on information of pulses generated from the special Wiegand wire (100, 103) and a Wiegand wire of the plurality of Wiegand wires (102, 104, 105, 106) located at a point facing the special Wiegand wire (100, 103).

3. The tachometer device (10) of claim 2, wherein, when the pulses detected by the first measurement channel (A) and the second measurement channel (B) are detected at different points in time and are within a preset interval, the control unit (130) recognizes the pulses as pulses output from the special Wiegand wire (100, 103) and the Wiegand wire of the plurality of Wiegand wires (102, 104, 105, 106) located at the point facing the special Wiegand wire (100, 103).

4. A fault detection method using a tachometer device (10), the fault detection method comprising:
receiving (S610) pulse signals from a first measurement channel (A) and a second measurement channel (B) arranged to face each other near a rotor (110) including a plurality of Wiegand wires (102, 104, 105, 106) and at least one special Wiegand wire (100, 103); wherein the plurality of Wiegand wires (102, 104, 105, 106) are uniformly arranged along a circumference of the rotor (110);
identifying (S620) an absolute position of the special Wiegand wire (100, 103) based on the pulse signals measured at different times from the first measurement channel (A) and the second measurement channel (B);
identifying (S630) a relative position of another Wiegand wire of the plurality of Wiegand wires (102, 104, 105, 106) based on the absolute position of the special Wiegand wire (100, 103);
identifying a Wiegand wire (100, 102, 103, 104, 105, 106) in which a pulse signal is not identified; and
detecting a fault of the Wiegand wire (100, 102, 103, 104, 105, 106) when a pulse signal is not continuously recognized in the Wiegand wire (100, 102, 103, 104, 105, 106) at the same position,
wherein the at least one special Wiegand wire (100, 103) is installed to have a different interval from the plurality of Wiegand wires (102, 104, 105, 106).

5. The fault detection method of claim 4, wherein, in the step of identifying (S620) the absolute position of the special Wiegand wire (100, 103), when the pulses detected by the first measurement channel (A) and the second measurement channel (B) are detected at different points in time and are within a preset interval, the pulses are identified as pulses output from the special Wiegand wire (100, 103) and the Wiegand wire of the plurality of Wiegand wires (102, 104, 105, 106) located at the point facing the special Wiegand wire (100, 103).

6. The fault detection method of claim 4, wherein, in the step of identifying (S630) the relative position of another Wiegand wire, the relative position is identified based on an interval between a point at which pulses are regularly omitted among pulses measured by the first measurement channel (A) and the second measurement channel (B) and the absolute position of the special Wiegand wire (100, 103).

7. A rail vehicle state monitoring method using the tachometer device (10) in accordance with at least one of claims 1 to 3, the rail vehicle state monitoring method comprising:
measuring (S710) a number of revolutions of a wheel of a rail vehicle based on the tachometer device (10) including a special Wiegand wire (100, 103); and
calculating (S720) a degree of wear of the wheel by analyzing a change in the number of revolutions of the wheel when the rail vehicle moves by a preset distance.

8. The rail vehicle state monitoring method of claim 7, further comprising:
outputting warning when the calculated degree of wear of the wheel is greater than or equal to a threshold.

9. The rail vehicle state monitoring method of claim 7, further comprising:
outputting warning when a difference in a change rate of the calculated degree of wear for each wheel is greater than or equal to a threshold.

## Patentansprüche

1. Tachometervorrichtung (10), umfassend:
einen Rotor (110), der eine Vielzahl von Wiegand-Drähten (102, 104, 105, 106) und mindestens einen speziellen Wiegand-Draht (100, 103) umfasst;
wobei die Vielzahl von Wiegand-Drähten (102, 104, 105, 106) gleichmäßig entlang eines Umfangs des Rotors angeordnet ist;
einen ersten Messkanal (A) und einen zweiten Messkanal (B), die so angeordnet sind, dass sie einander auf beiden Seiten des Rotors (110) zugewandt sind, und konfiguriert sind, um Impulse zu messen, die von der Vielzahl von Wiegand-Drähten (102, 104, 105, 106) und dem mindestens einen speziellen Wiegand-Draht (100, 103) erzeugt werden,
wobei der mindestens eine spezielle Wiegand-Draht (100, 103) so installiert ist, dass er ein anderes Intervall als die Vielzahl von Wiegand-Drähten (102, 104, 105, 106) aufweist.

2. Tachometervorrichtung (10) nach Anspruch 1, ferner umfassend:
eine Steuereinheit (130), die konfiguriert ist, um eine Anzahl von Umdrehungen einer Drehwelle, in der die Tachometervorrichtung (10) installierbar ist, basierend auf Informationen von Impulsen zu berechnen, die durch den ersten Messkanal (A) und den zweiten Messkanal (B) gemessen werden,
wobei eine absolute Position des speziellen Wiegand-Drahts (100, 103) basierend auf Informationen von Impulsen bestimmt wird, die von dem speziellen Wiegand-Draht (100, 103) und einem Wiegand-Draht der Vielzahl von Wiegand-Drähten (102, 104, 105, 106) erzeugt werden, der sich an einem Punkt befindet, der dem speziellen Wiegand-Draht (100, 103) zugewandt ist.

3. Tachometervorrichtung (10) nach Anspruch 2, wobei, wenn die Impulse, die durch den ersten Messkanal (A) und den zweiten Messkanal (B) erfasst werden, zu verschiedenen Zeitpunkten erfasst werden und innerhalb eines voreingestellten Intervalls liegen, die Steuereinheit (130) die Impulse als Impulse erkennt, die von dem speziellen Wiegand-Draht (100, 103) und dem Wiegand-Draht der Vielzahl von Wiegand-Drähten (102, 104, 105, 106) ausgegeben werden, der sich an dem Punkt befindet, der dem speziellen Wiegand-Draht (100, 103) zugewandt ist.

4. Fehlererfassungsverfahren unter Verwendung einer Tachometervorrichtung (10), wobei das Fehlererfassungsverfahren umfasst:
Empfangen (S610) von Impulssignalen von einem ersten Messkanal (A) und einem zweiten Messkanal (B), die so angeordnet sind, dass sie einander in der Nähe eines Rotors (110) zugewandt sind, der eine Vielzahl von Wiegand-Drähten (102, 104, 105, 106) und mindestens einen speziellen Wiegand-Draht (100, 103) umfasst; wobei die Vielzahl von Wiegand-Drähten (102, 104, 105, 106) gleichmäßig entlang eines Umfangs des Rotors (110) angeordnet ist;
Identifizieren (S620) einer absoluten Position des speziellen Wiegand-Drahts (100, 103) basierend auf den Impulssignalen, die zu verschiedenen Zeiten von dem ersten Messkanal (A) und dem zweiten Messkanal (B) gemessen werden;
Identifizieren (S630) einer relativen Position eines anderen Wiegand-Drahts der Vielzahl von Wiegand-Drähten (102, 104, 105, 106) basierend auf der absoluten Position des speziellen Wiegand-Drahts (100, 103);
Identifizieren eines Wiegand-Drahts (100, 102, 103, 104, 105, 106), in dem kein Impulssignal identifiziert wird; und
Erfassen eines Fehlers des Wiegand-Drahts (100, 102, 103, 104, 105, 106), wenn ein Impulssignal nicht kontinuierlich in dem Wiegand-Draht (100, 102, 103, 104, 105, 106) an der gleichen Position erkannt wird,
wobei der mindestens eine spezielle Wiegand-Draht (100, 103) so installiert ist, dass er ein anderes Intervall als die Vielzahl von Wiegand-Drähten (102, 104, 105, 106) aufweist.

5. Fehlererfassungsverfahren nach Anspruch 4, wobei in dem Schritt zum Identifizieren (S620) der absoluten Position des speziellen Wiegand-Drahts (100, 103), wenn die Impulse, die durch den ersten Messkanal (A) und den zweiten Messkanal (B) erfasst werden, zu verschiedenen Zeitpunkten erfasst werden und innerhalb eines voreingestellten Intervalls liegen, die Impulse als Impulse identifiziert werden, die von dem speziellen Wiegand-Draht (100, 103) und dem Wiegand-Draht der Vielzahl von Wiegand-Drähten (102, 104, 105, 106) ausgegeben werden, der sich an dem Punkt befindet, der dem speziellen Wiegand-Draht (100, 103) zugewandt ist.

6. Fehlererfassungsverfahren nach Anspruch 4, wobei in dem Schritt zum Identifizieren (S630) der relativen Position eines anderen Wiegand-Drahts die relative Position basierend auf einem Intervall zwischen einem Punkt, an dem regelmäßig Impulse unter Impulsen ausgelassen werden, die durch den ersten Messkanal (A) und den zweiten Messkanal (B) gemessen werden, und der absoluten Position des speziellen Wiegand-Drahts (100, 103) identifiziert wird.

7. Schienenfahrzeugzustandsüberwachungsverfahren unter Verwendung der Tachometervorrichtung (10) nach einem der Ansprüche 1 bis 3, wobei das Schienenfahrzeugzustandsüberwachungsverfahren umfasst:
Messen (S710) einer Anzahl von Umdrehungen eines Rads eines Schienenfahrzeugs basierend auf der Tachometervorrichtung (10), die einen speziehen Wiegand-Draht (100, 103) enthält; und
Berechnen (S720) eines Verschleißgrads des Rads durch Analysieren einer Änderung der Anzahl von Umdrehungen des Rads, wenn sich das Schienenfahrzeug um eine voreingestellte Strecke bewegt.

8. Schienenfahrzeugzustandsüberwachungsverfahren nach Anspruch 7, ferner umfassend:
Ausgeben einer Warnung, wenn der berechnete Verschleißgrad des Rads größer als oder gleich einem Schwellenwert ist.

9. Schienenfahrzeugzustandsüberwachungsverfahren nach Anspruch 7, ferner umfassend:
Ausgeben einer Warnung, wenn eine Differenz in einer Änderungsrate des berechneten Verschleißgrads für jedes Rad größer als oder gleich einem Schwellenwert ist.

## Revendications

1. Dispositif tachymétrique (10) comprenant :
un rotor (110) incluant une pluralité de fils de Wiegand (102, 104, 105, 106) et au moins un fil de Wiegand spécial (100, 103) ; dans lequel la pluralité de fils de Wiegand (102, 104, 105, 106) sont disposés uniformément le long d'une circonférence du rotor,
un premier canal de mesure (A) et un second canal de mesure (B) disposés de manière à se faire face des deux côtés du rotor (110) et configurés pour mesurer les impulsions générées par la pluralité de fils de Wiegand (102, 104, 105 106) et par ledit au moins un fil de Wiegand spécial (100, 103),
dans lequel ledit au moins un fil de Wiegand spécial (100, 103) est installé de manière à avoir un intervalle différent de celui de la pluralité de fils de Wiegand (102, 104, 105, 106).

2. Dispositif tachymétrique (10) selon la revendication 1, comprenant en outre :
une unité de commande (130) configurée pour calculer un nombre de tours d'un arbre de rotation dans lequel le dispositif tachymétrique (10) peut être installé, sur la base d'informations des impulsions mesurées par le premier canal de mesure (A) et le second canal de mesure (B),
dans lequel une position absolue du fil de Wiegand spécial (100, 103) est déterminée sur la base des informations des impulsions générées par le fil de Wiegand spécial (100, 103) et un fil de Wiegand de la pluralité de fils de Wiegand (102, 104, 105, 106) situé à un point faisant face au fil de Wiegand spécial (100, 103).

3. Dispositif tachymétrique (10) selon la revendication 2, dans lequel, lorsque les impulsions détectées par le premier canal de mesure (A) et le second canal de mesure (B) sont détectées à des moments différents et se situent à l'intérieur d'un intervalle prédéfini, l'unité de commande (130) reconnaît les impulsions comme étant des impulsions émises par le fil de Wiegand spécial (100, 103) et le fil de Wiegand de la pluralité de fils de Wiegand (102, 104, 105, 106) situé au point faisant face au fil de Wiegand spécial (100, 103).

4. Procédé de détection de défauts utilisant un dispositif tachymétrique (10), le procédé de détection de défauts consistant à :
recevoir (S610) des signaux d'impulsion provenant d'un premier canal de mesure (A) et d'un second canal de mesure (B) disposés de manière à se faire face à proximité d'un rotor (110) incluant une pluralité de fils de Wiegand (102, 104, 105, 106) et au moins un fil de Wiegand spécial (100, 103) ; dans lequel la pluralité de fils de Wiegand (102, 104, 105, 106) sont disposés uniformément le long d'une circonférence du rotor (110) ;
identifier (S620) une position absolue du fil de Wiegand spécial (100, 103) sur la base des signaux d'impulsion mesurés à différents moments à partir du premier canal de mesure (A) et du second canal de mesure (B) ;
identifier (S630) une position relative d'un autre fil de Wiegand de la pluralité de fils de Wiegand (102, 104, 105, 106) sur la base de la position absolue du fil de Wiegand spécial (100, 103) ;
identifier un fil de Wiegand (100, 102, 103, 104, 105, 106) dans lequel un signal d'impulsion n'est pas identifié ; et
détecter un défaut du fil de Wiegand (100, 102, 103, 104, 105, 106) lorsqu'un signal d'impulsion n'est pas reconnu en continu dans le fil de Wiegand (100, 102, 103, 104, 105, 106) à la même position,
dans lequel ledit au moins un fil de Wiegand spécial (100, 103) est installé de manière à avoir un intervalle différent de celui de la pluralité de fils de Wiegand (102, 104, 105, 106).

5. Procédé de détection de défauts selon la revendication 4, dans lequel, dans l'étape consistant à identifier (S620) la position absolue du fil de Wiegand spécial (100, 103), lorsque les impulsions détectées par le premier canal de mesure (A) et le second canal de mesure (B) sont détectées à des moments différents et se situent à l'intérieur d'un intervalle prédéfini, les impulsions sont identifiées comme étant des impulsions émises par le fil spécial Wiegand (100, 103) et le fil de Wiegand de la pluralité de fils de Wiegand (102, 104, 105, 106) situé au point faisant face au fil spécial Wiegand (100, 103).

6. Procédé de détection de défauts selon la revendication 4, dans lequel, dans l'étape consistant à identifier (S630) la position relative d'un autre fil de Wiegand, la position relative est identifiée sur la base d'un intervalle entre un point où des impulsions sont régulièrement omises parmi les impulsions mesurées par le premier canal de mesure (A) et le second canal de mesure (B) et la position absolue du fil de Wiegand spécial (100, 103).

7. Procédé de surveillance de l'état d'un véhicule ferroviaire utilisant le dispositif tachymétrique (10) selon au moins l'une des revendications 1 à 3, le procédé de surveillance de l'état d'un véhicule ferroviaire consistant à :
mesurer (S710) un nombre de tours d'une roue d'un véhicule ferroviaire sur la base du dispositif tachymétrique (10) incluant un fil de Wiegand spécial (100, 103) ; et
calculer (S720) un degré d'usure de la roue en analysant un changement dans le nombre de tours de la roue lorsque le véhicule ferroviaire se déplace d'une distance prédéfinie.

8. Procédé de surveillance de l'état d'un véhicule ferroviaire selon la revendication 7, consistant en outre à :
émettre un avertissement lorsque le degré d'usure calculé de la roue est supérieur ou égal à un seuil.

9. Procédé de surveillance de l'état d'un véhicule ferroviaire selon la revendication 7, consistant en outre à :
émettre un avertissement lorsqu'une différence dans un taux de changement du degré d'usure calculé pour chaque roue est supérieure ou égale à un seuil.
